# EUROPÄISCHE PATENTSCHRIFT

(11) **EP 0 866 038 B1**
(45) Veröffentlichungstag und Bekanntmachung des Hinweises auf die Patenterteilung: **27.06.2001**
(21) Anmeldenummer: 98105039.6
(22) Anmeldetag: 19.03.1998
(51) Int. Cl.: C04B 18/16

(54) **Verfahren zum Herstellen von Armierungs-Klebe- und Spachtelmassen für die Bauindustrie**
Process for manufacturing reinforcement, adhesion or filling pastes for the building industry
Procédé de fabrication des masses d'armature, d'adhésion ou des enduits pour l'industrie de construction

(30) Priorität: 20.03.1997 DE 19711663
(43) Veröffentlichungstag der Anmeldung: 23.09.1998
(73) Patentinhaber: STO AG, D-79778 Stühlingen (DE)
(72) Erfinder: Felber, Alois, 9545 Radentheim (AT)
(74) Vertreter: Patentanwälte Leinweber & Zimmermann

(56) Entgegenhaltungen:
- DE-A- 2 330 824
- DE-A- 4 343 080
- DE-A- 19 548 645

## Beschreibung

Die Erfindung bezieht sich auf ein Verfahren zum Herstellen von Armierungs-, Klebe- und Spachtelmassen für die Bauindustrie.

In der Bauindustrie werden in großem Umfang Farben und pastöse Produkte, wie Spachtelmassen, Grund- und Deckputze bis-hin zu Armierungs- und Klebemassen für Wärmedämmverbundsysteme in verschiedenen Körnungen und Tönungen verarbeitet. Dabei verbleiben häufig große Mengen an nicht mehr verarbeitbaren Restmaterialien, deren Entsorgung der Bauindustrie und den zuliefernden Firmen große Probleme bereitet.

In geringem Maße ist es zwar möglich, Reststoffe bei der Produktion oder Tönung von Neumaterialien der gleichen Art wieder einzuarbeiten. Dies ist jedoch mit gewissen Risiken verbunden, da die Qualität der zurückgenommenen Restmengen unzureichend sein kann. Deshalb wird der Hauptanteil der Restmengen kostenintensiv entsorgt.

Überraschenderweise hat sich nun gezeigt, daß es dieser Entsorgung nicht bedarf, wenn erfindungsgemäß durch Vermischen von in der Bauindustrie anfallenden Restmengen pastöser Produkte, nämlich Farben und/oder Armierungs- und/oder Klebe-und/oder Spachtelmassen sowie Restmengen von Putzen mit verschiedenen Tönungen und unterschiedlicher Körnung nach dem Zerkleinern derselben eine Paste hergestellt wird, die als Halbfabrikat einsetzbar ist. Diese pastösen Massen lassen sich auf übliche Weise zu Armierungs-, Klebe- und Spachtelmassen weiterverarbeiten.

An dieser Stelle ist zu erwähnen, daß es bereits bekannt ist (DE 43 43 080 A1), aus Reststoffen bzw. Abfällen, die durch Behandlung zu Grundstoffen der Baustoffherstellung umgewandelt werden, Faserstoffe und Pulverstoffe sowie Granulatstoffe zu schaffen, um auf diese Weise einen Kreislauf der Rohstoffe herzustellen. Dabei werden die organischen Stoffe, Reststoffe und Abfälle dieser Stoffe zur Weiterverarbeitung und als Ausgangsstoff für die Baustoffherstellung als mineralisierter Grundstoff geschaffen. Zu diesem Zweck werden pastöse Stoffe so lange mit Fasern, Pulver und/oder Granulat vermischt, bis ein für die Weiterverarbeitung geeignetes Grundmaterial geschaffen ist. In diesem Zusammenhang ist auch daran gedacht, einen als Fertigmörtel und/oder Kleber für die Herstellung von Baustoffen geeignetes Material so lange mit mineralischen Stoffen zu vermischen, bis eine gleichmäßige Masse erzielt wird. Die Zielsetzung und das Ergebnis weichen somit auffallend von denjenigen nach der vorliegenden Erfindung ab.

Als besonders zweckmäßig hat es sich erfindungsgemäß herausgestellt, wenn für das Zerkleinern der Putze mit unterschiedlicher Körnung eine Walzenreibmaschine eingesetzt wird.

Die Erfindung richtet sich auch auf die Anwendung der durch Vermischen von in der Bauindustrie anfallenden Restmengen von zerkleinerten Putzen verschiedener Körnungen und Tönungen mit pastösen Produkten, nämlich Farben und/oder Armierungs-und/oder Klebe- und/oder Spachtelmassen gebildeten Paste als Halbfabrikat bei der Herstellung von Armierungs-, Klebe- und Spachtelmassen für die Bauindustrie.

Obwohl die vorhandenen Restmengen erhebliche Unterschiede in Körnung und Tönung aufweisen, ist deren Einsatz unproblematisch möglich. Voraussetzung ist nur, daß bei diesem Einsatz der Körnung der Restmengen Rechnung getragen wird, indem das einem Recyclingprozeß zugeführte Gut fein zerkleinert und einem Mischvorgang unterzogen wird. Da für die Herstellung der eingangs genannten Produkte nur sehr feines Korn zum Einsatz kommt, werden die Restmengen somit zunächst zerkleinert, und zwar z.B. mittels einer Walzenreibmaschine, wie sie in der DE 23 30 824 beschrieben ist. Da bei den zerkleinerten Restmengen ein hoher Anteil qualitativ sehr hochwertiger Endbeschichtungen zu erwarten ist, entsteht aus dem Gemisch der zerkleinerten Restmengen ein Rohstoff als Halbfabrikat für die Herstellung vorgenannter Produkte, der in der Qualität den ansonsten zur Herstellung dieser Massen verwendeten Rohstoffen mindestens gleichwertig, in der Regel aber günstiger ist.

Die Tönung der resultierenden Paste, die aufgrund der unterschiedlichen Tönungen der verwendeten Reststoffe nicht einheitlich sein kann, spielt für den Verwendungszweck eine untergeordnete Rolle, da die genannten Produkte nicht als Deckbeschichtung zum Einsatz kommen.

Mit dem erfindungsgemäßen Verfahren zur Herstellung einer pastösen Masse für die Produktion von Armierungs-, Klebeund Spachtelmassen ist es demnach möglich, auf einfache und kostengünstige Weise die entstehenden pastösen Restmengen der Bauindustrie in einem Recyclingprozeß wieder einer hochwertigen Verwendung zuzuführen. Die bislang übliche kostenintensive und die Umwelt belastende Entsorgung entfällt.

## Patentansprüche

1. Verfahren zum Herstellen von Armierungs-, Klebe- und Spachtelmassen für die Bauindustrie, dadurch gekennzeichnet, daß durch Vermischen von in der Bauindustrie anfallenden Restmengen pastöser Produkte, nämlich Farben und/oder Armierungs- und/oder Klebe- und/oder Spachtelmassen sowie Restmengen von Putzen mit verschiedenen Tönungen und unterschiedlicher Körnung nach dem Zerkleinern derselben eine Paste hergestellt wird, die als Halbfabrikat einsetzbar ist.

2. Verfahren nach Anspruch 1, dadurch gekennzeichnet, daß für das Zerkleinern der Putze mit unterschiedlicher Körnung eine Walzenreibmaschine eingesetzt wird.

3. Anwendung einer durch Vermischen von in der Bauindustrie anfallenden Restmengen von zerkleinerten Putzen verschiedener Körnungen und Tönungen mit pastösen Produkten, nämlich Farben und/oder Armierungs- und/oder Klebe- und/oder Spachtelmassen gebildeten Paste als Halbfabrikat bei der Herstellung von Armierungs-, Klebe- und Spachtelmassen für die Bauindustrie.

4. Anwendung nach Anspruch 3, gekennzeichnet durch Verwendung von mittels einer Walzenreibmaschine zerkleinerten Restmengen von Putzen mit unterschiedlicher Körnung.

## Claims

1. Process for preparing reinforcing compositions, adhesive compositions and filling compositions for the construction industry, characterized in that residues of pastelike products, namely paints and/or reinforcing and/or adhesive and/or filling compositions, and residues of renders having various shades and different finenesses, these residues being obtained in the construction industry, are comminuted and then mixed to prepare a paste which can be employed as a semi-finished product.

2. Process according to Claim 1, characterized in that the comminution of the renders having different finenesses is carried out using a roll mill.

3. Use of a paste formed by mixing residues of comminuted renders having various finenesses and shades with pastelike products, namely paints and/or reinforcing and/or adhesive and/or filling compositions, these residues being obtained in the construction industry, as a semi-finished product in the preparation of reinforcing, adhesive and filling compositions for the construction industry.

4. Use according to Claim 3, characterized by the use of residues of renders having different finenesses, which have been comminuted by means of a roll mill.

## Revendications

1. Procédé de fabrication de masses pour armer, coller et mastiquer pour l'industrie de construction, caractérisé en ce qu'il est fabriqué par un mélange de quantités résiduelles produites dans l'industrie de la construction de produits pâteux, à savoir de peintures et/ou de masses pour armer et/ou coller et/ou mastiquer ainsi que de quantités résiduelles d'enduits de colorations différentes et de granulation différente, après le fractionnement de ceux-ci, une patte qui peut être utilisée comme produit semi-fini.

2. Procédé selon la revendication 1, caractérisé en ce qu'on utilise pour le fractionnement de l'enduit d'une granulation différente une machine à broyer à rouleaux.

3. Utilisation d'une pâte formée par le mélange de quantités résiduelles produites dans l'industrie de la construction d'enduits fractionnés de granulation et colorations différentes avec des produits pâteux, à savoir des peintures et/ou des masses pour armer et/ou coller et/ou mastiquer, comme produits semi-finis lors de la fabrication de masses pour armer, coller et mastiquer pour l'industrie de la construction.

4. Utilisation selon la revendication 3, caractérisée par l'utilisation de quantités résiduelles fractionnées par une machine à broyer à rouleaux d'enduits d'une granulation différente.
